# EUROPEAN PATENT SPECIFICATION

(11) **EP 2 492 156 B1**
(45) Date of publication and mention of the grant of the patent: **05.03.2014**
(21) Application number: 11001614.4
(22) Date of filing: 28.02.2011
(51) Int. Cl.: B60R 21/36

(54) **Pedestrian protection airbag for a vehicle**
Fußgängerschutzluftkissen für ein Fahrzeug
Airbag de protection des piétons pour véhicule

(43) Date of publication of application: 29.08.2012
(73) Proprietor: Autoliv Development AB, 44783 Vårgårda (SE)
(72) Inventor: Pretot, Stephane, 44332 Lerum (SE)

(56) References cited:
- EP-A1- 1 975 015
- EP-A2- 1 304 269
- EP-A2- 1 992 526
- DE-A1- 10 319 284
- JP-A- 2006 205 934

## Description

The invention relates to a pedestrian protection airbag for a vehicle comprising the features of the preamble of claim 1.

The purpose of using pedestrian protection airbags is to protect pedestrians or bicycle drivers in the event of an accident against hitting onto the windshield or other outer surfaces of the vehicle and to thereby prevent severe injuries. The pedestrian protection airbag (PPA) must cover in the inflated state a large outer surface of the vehicle, like for example the windshield and the A-pillars of the vehicle structure, onto which the pedestrian or the bicycle driver would impact for example in a frontal impact.

Because of the large surface to be covered, it is one essential problem to be solved when designing the airbag that the PPA itself must be relatively large dimensioned. Furthermore, the PPA needs to be inflated over a relatively long distance across the windshield especially in the side upwards direction with staying at the same time as close as possible to the windshield surface, to the A-pillar surfaces or other outer surfaces. This is especially problematic when the PPA is inflated under bad circumstances, like for example disadvantageous accelerations acting on the airbag, or when the PPA is hitting on external obstacles.

One embodiment of a pedestrian protection airbag is known from document DE 103 19 284 A1. In this embodiment the airbag is inflated from the front side of the hood towards the windshield.

Another embodiment, corresponding to the preamble of claim 1, is known from document JP 2006-205934 A where the airbag is inflated from a gap between the hood and the windshield.

In both embodiments the airbag is provided with straps or tethers which are tensioned while the inflation and do therefore control the inflation characteristic.

with respect to the described background it is the object of the invention to provide a pedestrian protection airbag with an improved inflation characteristic.

According to the invention, it is suggested that the pedestrian protection airbag is provided with at least one tension strap which is fixed with both ends to at least one of the fabric layers, wherein the tension strap is fixed with one section to only one of the fabric layers by a tear seam, and wherein the inflation characteristic is controlled by tearing off the tear seam during the inflation. The advantage of the tension strap fixed by the tear seam is that the inflation characteristic can be controlled because the point, where the tension force of the tension strap is acting on the PPA, changes during the inflation of the airbag because of tearing off the seam. This effect can also be explained by the increasing acting length of the tension strap because of tearing off the tear seam. The individual inflation characteristic can be adjusted in detail by the orientation of the strap, the length of the strap and the length of the tear seam.

Furthermore, it is suggested that the tension strap is fixed by the tear seam to the fabric layer abutting on the vehicle structure. The advantage of this solution is that the airbag can be pulled by the tension strap towards the outer surface of the vehicle, so that the airbag can be inflated with a reduced gap to the vehicle structure.

Another preferred embodiment of the invention can be seen in that the tension strap is fixed with a first end at a lower part of the airbag and with the tear seam to a part of the airbag which is inflated upwardly during the inflation of the airbag. The lower attachment point of the strap does not change the position, whereas the upper point, where the tension force is introduced into the airbag, moves when the tear seam is tearing off. Therefore, the section of the tension strap with the tear seam is arranged at the part of the airbag, which moves during the inflation, so that the changing geometry can be controlled and influenced by the movement of the point, where the tension strap introduces the force into the PPA.

Moreover, it is suggested that the tension strap extends from a lower central section of the unfolded airbag diagonally at an angle to a laterally located section of the unfolded airbag. This orientation of the tension strap enables especially a controlled inflation of a large pedestrian protection airbag, which is inflated from the central section under the hood towards the windshield upwardly and sidewise as well.

The inflation characteristic can be further improved, when the tension strap crosses a seam connecting both fabric layers. The seam acts in this case as a hinge, wherein the tension strap is fixed with the two ends to two parts of the airbag, which are separated by the hinge.

Furthermore, it is suggested that the section of the tension strap fixed by the tear seam extends from one end up to the middle of the strap. The advantage of the tear seam extending up to the upper end is that the inflation of the airbag can be controlled using the full length of the strap without creating any peaks in the tension force.

It has been shown that a reasonable control of the inflation characteristic can be provided when the section fixed by the tear seam extends over a length of at least 0.15 m.

Furthermore it is suggested that the tension strap is fixed with the other end to a housing of the PPA. By fixing the other end of the tension strap at the housing it is possible to connect the tension strap in a very stable manner at the PPA, wherein the inflation of the PPA is controlled versus a vehicle fixed point.

Alternatively it is suggested that the tension strap is also fixed with the other end to the fabric layer. By fixing also the other end of the tension strap at the fabric layer it is possible to control the inflation of the PPA especially between two different sections of the PPA independent from the fixation or orientation at or to the vehicle.

Furthermore it is suggested that the free length of the tension strap between the fixation point at one end and the beginning of the tear seam is smaller than the total length of the flat PPA between those points. The advantage of the suggested solution is that the PPA is obliged in an arc shaped orientation at the beginning of the inflation with pressing the PPA onto the windshield, so that the PPA may not loose the contact with the windshield.

In the following, the invention shall be illustrated on the basis of a preferred embodiment with reference to the accompanying drawings, wherein:
- Fig. 1: shows a pedestrian protection airbag prior to the folding and/or rolling;
- Fig. 2: shows a cross section of the airbag in an initial phase during the inflation;
- Fig. 3: shows a cross section of the airbag in an intermediate phase during the inflation;
- Fig. 4: shows a cross section of the airbag after the inflation.

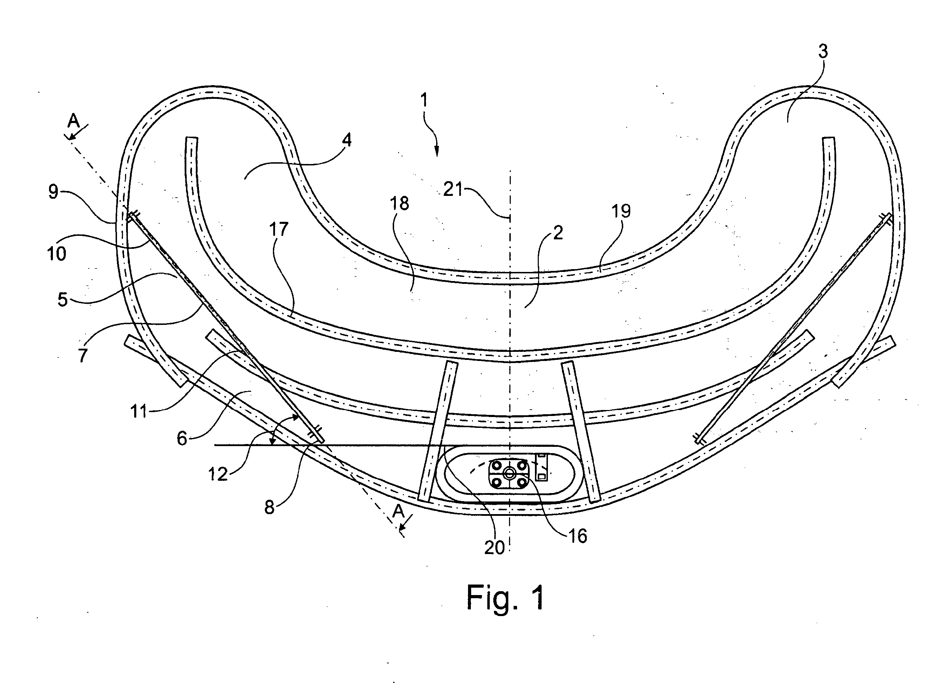

Figure 1 shows a pedestrian protection airbag (PPA) 1 in the unfolded state with a central section 2 and two sidewise and upwardly extending side sections 3 and 4. The PPA 1 comprises an opening 16, to which a not shown gas generator can be connected, which inflates the PPA 1 in the event of an accident.

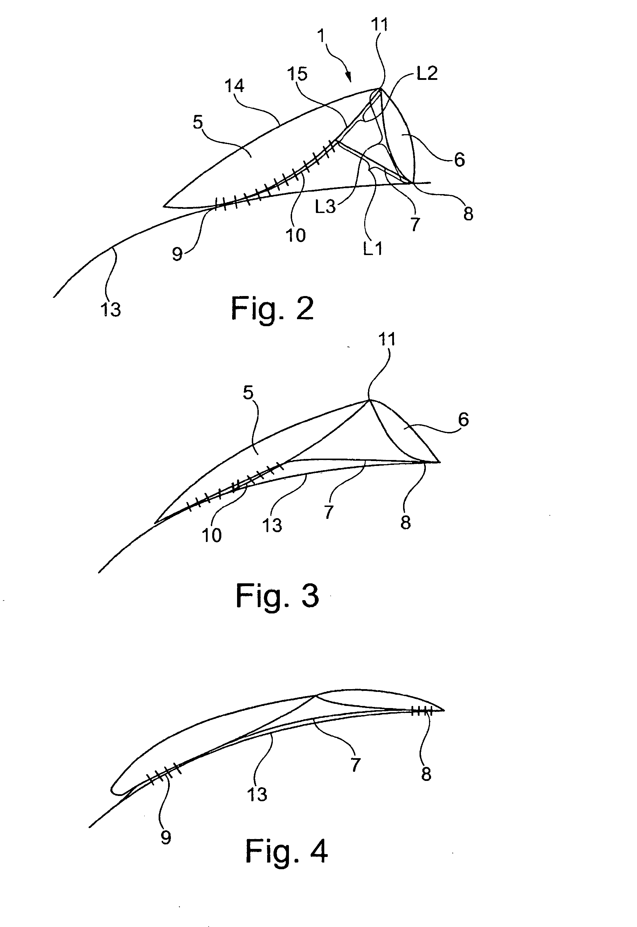

The PPA 1 itself comprises two fabric layers 14 and 15 shown in the figures 2,3 and 4, which are made in a one piece woven (OPW) technology in a single weaving process or which are produced separately. The two fabric layers 14 and 15 are connected at the outer rim 19 by a seam or by a connection of the warp and weft threads of the two fabric layers 14 and 15 to provide a cavity which is in a fluidic connection with the gas generator. The cavity is further subdivided by two seams 11 and 17 in three chambers 6,5 and 18 giving the PPA 1 the shape of a mattress. The seams 11 and 17 are produced in the same way like the rim 19, and do not extend up to the rim 19, so that the chambers 5,6 and 18 are in a fluidic connection to each other. The seams 11 and 17 may also be replaced by baffles with holes providing a direct fluidic connection between the chambers 5,6 and 18.

The shape of the PPA 1 is adapted to the outer surface of the vehicle structure, which is in the present case a windshield 13 shown in a section in the figures 2,3 and 4. The central section 2 is adapted to the middle lower section of the windshield 13, while the side sections 3 and 4 are extending upwardly to cover also at least a portion of the A-pillars. As the windshield 13 together with the A-pillars comprises a relatively large outer surface, the PPA 1 got also large dimensions with a height of 30 to 80 cm and a width of 150 cm to 250 cm depending on the size of the vehicle. The PPA 1 is therefore one of the largest airbags in the vehicle.

According to the invention, the PPA 1 is provided with two symmetrically arranged tension straps 7, wherein one is described in the following by reference numbers. The tension strap 7 extends from a lower first end 8 at the central section 2 diagonally sidewise and upwards to a second end 9 at the side section 4. The tension strap 7 is attached with both ends 8 and 9 via a stitching to the PPA 1, wherein the tension strap 7 is fixed over approximately the half of its length via a tear seam 10 to the fabric layer 15. The tear seam 10 extends from the end 9 up to the middle of the tension strap. The tension strap 7 is arranged at an angle 12 smaller than 90 degrees to a plane 20 cutting the symmetric axis 21 of the PPA 1 perpendicularly. The tension strap 7 crosses the seam 11 of the PPA 1 and got a length of approximately 50 to 80 cm.

The controlling of the inflation characteristic is described in the following with respect to the figures 2,3 and 4, showing a cross section of the PPA 1 along the cutting line A-A in different phases during the inflation process. In general, it is visible that the tension strap 7 is fixed with the tear seam 10 only with the fabric layer 15, which abuts on the windshield 13, so that the tear seam 10 does not disturb the inflation of the chambers 5 and 6. The tension strap 7 may also stabilize the PPA 1 itself and especially the relative movement of the chambers 5 and 6 while the inflation.

In the figure 2 the PPA 1 is shown in an initial phase of the inflation in a cross section along the cutting line A-A from figure 1. Because of the tear seam 10 the length L1 of the tension strap 7 between the attachment points, where the forces are introduced into the PPA 1, is shorter than the total length L2 + L3 over the surfaces of the chambers 5 and 6 between the attachment points. Therefore, the chambers 5 and 6 are obliged to arrange at an angle to each other using the seam 11 as a kind of a hinge. Because of this arrangement of the chambers 5 and 6 to each other the chamber 5 is pulled towards the windshield 13, so that the gap between the windshield 13 and the PPA 1 can be reduced to a minimum.

In figure 3 it is shown the same cross section of the PPA 1 in a later intermediate phase of the inflation. As the PPA 1 is inflated to a bigger volume the chambers 5 and 6 are pushed outwardly, while the chamber 5 is moved along the windshield 13 and abuts thereby with a bigger surface on the windshield 13. The movement of the PPA 1 and especially the movement of the chamber 5 versus the chamber 6 is controlled by the tear off process of the tear seam 10, wherein the angle between the chambers 5 and 6 is increasing by using the seam 11 as a hinge.

In the figure 4 the PPA 1 is shown in a final phase of the inflation, where the tear seam 10 is released in total up to the end 9, so that the PPA 1 is abutting with its full surface on the windshield 13. The tear seam 10 extends from the end 9 up to the middle of the tension strap 7, so that the tear off process and the controlling of the movement of the chamber 5 takes place until the end of the inflation process and is not interrupted with negative force peaks created by the tension strap 7.

## Claims

1. Pedestrian protection airbag (PPA) (1) for a vehicle comprising at least one chamber (5,6) designed by at least two fabric layers (14, 15) with a cavity in between and a gas generator which is in a fluidic connection with the cavity of the chamber (5,6) and which generates upon activation a gas flow guided into the cavity and inflating the chamber (5,6) in a direction covering the outer surface of the vehicle, the pedestrian protection airbag (1) being provided with at least one tension strap (7), **characterized in that** the tension strap (7) is fixed with at least one end (8, 9) to one of the fabric layers (14,15) by a tear seam (10), wherein the inflation characteristic is controlled by tearing off the tear seam (10) during the inflation.

2. Pedestrian protection airbag (PPA) (1) according to claim 1, **characterized in that** the tension strap (7) is fixed by the tear seam (10) to the fabric layer (15) abutting on the vehicle structure in the inflated state.

3. Pedestrian protection airbag (PPA) (1) according to any one of the preceding claims, **characterized in that** the tension strap (7) is fixed with a first end (8) at a lower part of the airbag and with the tear seam (10) to a part of the airbag, which is inflated upwardly during the inflation of the PPA (1) .

4. Pedestrian protection airbag (PPA) (1) according to any one of the preceding claims, **characterized in that** the tension strap (7) extends from a central section (2) of the unfolded PPA (1) diagonally at an angle to a laterally located section (3,4) of the unfolded PPA (1).

5. Pedestrian protection airbag (PPA) (1) according to any one of the preceding claims, **characterized in that** the tension strap (7) crosses a seam (11) connecting both fabric layers (14,15).

6. Pedestrian protection airbag (PPA) (1) according to any one of the preceding claims, **characterized in that** the section of the tension strap (7) fixed by the tear seam (10) extends from one end (9) up to the middle of the tension strap (7).

7. Pedestrian protection airbag (PPA) (1) according to any one of the preceding claims, **characterized in that** the section of the tension strap (7) fixed by the tear seam (10) extends over a length of at least 0.15 m.

8. Pedestrian protection airbag (PPA) (1) according to any one of the preceding claims, **characterized in that** the tension strap (7) is fixed with the other end to a housing of the PPA (1) .

9. Pedestrian protection airbag (PPA) (1) according to any one of the preceding claims, **characterized in that** the tension strap (7) is also fixed with the other end (8,9) to the fabric layer (14,15).

10. Pedestrian protection airbag (PPA) (1) according to any one of the preceding claims, **characterized in that** the free length (L1) of the tension strap (7) between the fixation point at one end (8,9) and the beginning of the tear seam (10) is smaller than the total length (L2+L3) of the flat PPA (1) between those points.

## Patentansprüche

1. Fußgängerschutzluftkissen (FSL) (1) für ein Fahrzeug, das mindestens eine Kammer (5, 6), die mit mindestens zwei Stofflagen (14, 15) mit einem Hohlraum dazwischen ausgestaltet ist, und einen Gasgenerator umfasst, der in einer fluidmäßigen Verbindung mit dem Hohlraum der Kammer (5, 6) steht und der bei Aktivierung einen Gasstrom erzeugt, der in den Hohlraum geleitet wird und die Kammer (5, 6) in einer Richtung aufbläst, bei der die Außenfläche des Fahrzeugs bedeckt wird, wobei das Fußgängerschutzluftkissen (1) mit mindestens einem Zugband (7) versehen ist, **dadurch gekennzeichnet, dass** das Zugband (7) mit mindestens einem Ende (8, 9) an einer der Stofflagen (14, 15) mit einer Reißnaht (10) befestigt ist, wobei das Aufblasverhalten durch das Reißen der Reißnaht (10) während des Aufblasens gesteuert wird.

2. Fußgängerschutzluftkissen (FSL) (1) nach Anspruch 1, **dadurch gekennzeichnet, dass** das Zugband (7) mit der Reißnaht (10) an der Stofflage (15) befestigt ist, die im aufgeblasenen Zustand an die Fahrzeugstruktur angrenzt.

3. Fußgängerschutzluftkissen (FSL) (1) nach einem der vorhergehenden Ansprüche, **dadurch gekennzeichnet, dass** das Zugband (7) mit einem ersten Ende (8) an einem unteren Teil des Luftkissens und mit der Reißnaht (10) an einem Teil des Luftkissens befestigt ist, der während des Aufblasens des FSL (1) nach oben aufgeblasen wird.

4. Fußgängerschutzluftkissen (FSL) (1) nach einem der vorhergehenden Ansprüche, **dadurch gekennzeichnet, dass** das Zugband (7) von einem mittigen Abschnitt (2) des entfalteten FSL (1) diagonal unter einem Winkel zu einem seitlich angeordneten Abschnitt (3, 4) des entfalteten FSL (1) verläuft.

5. Fußgängerschutzluftkissen (FSL) (1) nach einem der vorhergehenden Ansprüche, **dadurch gekennzeichnet, dass** das Zugband (7) eine Naht (11), die beide Stofflagen (14, 15) verbindet, kreuzt.

6. Fußgängerschutzluftkissen (FSL) (1) nach einem der vorhergehenden Ansprüche, **dadurch gekennzeichnet, dass** der Abschnitt des Zugbands (7), der mit der Reißnaht (10) befestigt ist, von einem Ende (9) bis zur Mitte des Zugbands (7) verläuft.

7. Fußgängerschutzluftkissen (FSL) (1) nach einem der vorhergehenden Ansprüche, **dadurch gekennzeichnet, dass** der Abschnitt des Zugbands (7), der mit der Reißnaht (10) befestigt ist, über eine Länge von mindestens 0,15 m verläuft.

8. Fußgängerschutzluftkissen (FSL) (1) nach einem der vorhergehenden Ansprüche, **dadurch gekennzeichnet, dass** das Zugband (7) mit dem anderen Ende an einem Gehäuse des FSL (1) befestigt ist.

9. Fußgängerschutzluftkissen (FSL) (1) nach einem der vorhergehenden Ansprüche, **dadurch gekennzeichnet, dass** das Zugband (7) auch mit dem anderen Ende (8, 9) an der Stofflage (14, 15) befestigt ist.

10. Fußgängerschutzluftkissen (FSL) (1) nach einem der vorhergehenden Ansprüche, **dadurch gekennzeichnet, dass** die freie Länge (L1) des Zugbands (7) zwischen dem Befestigungspunkt an einem Ende (8, 9) und dem Anfang der Reißnaht (10) kürzer ist als die Gesamtlänge (L2+L3) des nicht aufgeblasenen FSL (1) zwischen diesen Punkten.

## Revendications

1. Airbag de protection des piétons (APP) (1) pour un véhicule comprenant au moins une chambre (5, 6) réalisée par au moins deux couches de tissu (14, 15) avec une cavité entre elles et un générateur de gaz qui est en liaison fluidique avec la cavité de la chambre (5, 6) et qui génère lors de l'activation un flux de gaz guidé dans la cavité et gonflant la chambre (5, 6) dans une direction recouvrant la surface extérieure du véhicule, l'airbag de protection des piétons (1) étant muni d'au moins une bande de tension (7), **caractérisé en ce que** la bande de tension (7) est fixée avec au moins une extrémité (8, 9) à l'une des couches de tissu (14, 15) par une couture de rupture (10), la caractéristique de gonflage étant commandée par la rupture de la couture de rupture (10) pendant le gonflage.

2. Airbag de protection des piétons (APP) (1) selon la revendication 1, **caractérisé en ce que** la bande de tension (7) est fixée par la couture de rupture (10) à la couche de tissu (15) adjacente à la structure du véhicule à l'état gonflé.

3. Airbag de protection des piétons (APP) (1) selon l'une quelconque des revendications précédentes, **caractérisé en ce que** la bande de tension (7) est fixée avec une première extrémité (8) à une partie inférieure de l'airbag et avec la couture de rupture (10) à une partie de l'airbag qui est gonflée vers le haut pendant le gonflage de l'APP (1).

4. Airbag de protection des piétons (APP) (1) selon l'une quelconque des revendications précédentes, **caractérisé en ce que** la bande de tension (7) s'étend d'une portion centrale (2) de l'APP déployé (1) en diagonale selon un angle par rapport à une portion située sur les côtés (3, 4) de l'APP (1) déployé.

5. Airbag de protection des piétons (APP) (1) selon l'une quelconque des revendications précédentes, **caractérisé en ce que** la bande de tension (7) franchit une couture (11) reliant les deux couches de tissu (14, 15).

6. Airbag de protection des piétons (APP) (1) selon l'une quelconque des revendications précédentes, **caractérisé en ce que** la portion de la bande de tension (7) fixée par la couture de rupture (10) s'étend d'une extrémité (9) jusqu'au milieu de la bande de tension (7).

7. Airbag de protection des piétons (APP) (1) selon l'une quelconque des revendications précédentes, **caractérisé en ce que** la portion de la bande de tension (7) fixée par la couture de rupture (10) s'étend sur une longueur d'au moins 0,15 m.

8. Airbag de protection des piétons (APP) (1) selon l'une quelconque des revendications précédentes, **caractérisé en ce que** la bande de tension (7) est fixée avec l'autre extrémité à un boîtier de l'APP (1).

9. Airbag de protection des piétons (APP) (1) selon l'une quelconque des revendications précédentes, **caractérisé en ce que** la bande de tension (7) est également fixée avec l'autre extrémité (8, 9) à la couche de tissu (14, 15).

10. Airbag de protection des piétons (APP) (1) selon l'une quelconque des revendications précédentes, **caractérisé en ce que** la longueur libre (L1) de la bande de tension (7) entre le point de fixation à une extrémité (8, 9) et le début de la couture de rupture (10) est inférieure à la longueur totale (L2+L3) de l'APP (1) à plat entre ces points.
